# EUROPÄISCHE PATENTANMELDUNG

(11) **EP 4 116 780 A1**
(43) Veröffentlichungstag der Anmeldung: **11.01.2023**
(21) Anmeldenummer: 21020347.7
(22) Anmeldetag: 05.07.2021
(51) Int. Cl.: G05B 19/042, G05B 23/02, F25J 3/04

(54) **VERFAHREN UND ÜBERWACHUNGSSYSTEM ZUM ÜBERWACHEN EINES BETRIEBS EINER EINHEIT EINER VERFAHRENSTECHNISCHEN ANLAGE**

(71) Anmelder: Linde GmbH, 82049 Pullach (DE)
(72) Erfinder: Ferstl, Johann, München (DE)
(74) Vertreter: Imhof, Dietmar

(57) **Zusammenfassung**

Die Erfindung betrifft ein Verfahren zum Überwachen eines Betriebs einer Einheit in einer verfahrenstechnischen Anlage, durch welche Einheit mindestens ein Medienstrom geführt wird, wobei vorherrschende Werte von mehreren Betriebsparametern der Einheit (125) selbst und/oder von davorliegenden und/oder nachfolgenden Einheiten erfasst werden, wobei anhand eines Betriebsmodells (V) und den aktuellen Werten zumindest eines Teils der mehreren Betriebsparameter ein zulässiger Betriebsbereich (Δp_{R}) für wenigstens einen ausgewählten der Betriebsparameter bestimmt wird, und wobei in Abhängigkeit von dem aktuellen Wert des wenigstens einen ausgewählten der Betriebsparameters (Δp) und dem zulässigen Betriebsbereich (Δp_{R}) bestimmt wird, ob eine Maßnahme (M) eingeleitet werden soll, sowie ein entsprechendes Überwachungssystem und eine verfahrenstechnische Anlage.

## Beschreibung

Die Erfindung betrifft ein Verfahren zum Überwachen eines Betriebs einer Einheit in einer verfahrenstechnischen Anlage wie z.B. einer Luftzerlegungsanlage sowie ein Überwachungssystem hierfür und eine verfahrenstechnische Anlage mit einem oder mehreren solchen Überwachungssystemen

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Eine verfahrenstechnische Anlage wie beispielsweise eine Luftzerlegungsanlage (engl.: "Air Separation Unit", ASU) ist typischerweise eine komplexe Anlage mit verschiedenen Apparaten, Einbauten und Funktionseinheiten wie z.B. Abscheidern (insbesondere sog. "Demister" oder Tropfenabscheider, z.B. in Form ein Gestrickabscheidern) wie sie z.B. in Direktkontaktkühlern eingesetzt werden, aber z.B. auch Kolonnen mit (regulären) Stoffaustausch-Packungen oder -Füllkörpern. Durch solche Einheiten werden typischerweise einer oder mehrere Medienströme geführt.

Ein Demister z.B. dient zur Abscheidung von Nebel- und Flüssigkeitstropfen und damit zum Schutz einer nachfolgenden Funktionseinheit wie z.B. eines Adsorbers vor Flüssigkeitseintrag. Zur Überwachung solcher Einheiten wie Abscheider sowie deren Funktion kann der Druckverlust (des Medienstroms) über dem Abscheider als Prozesswert kontinuierlich gemessen werden. Bei deutlich erhöhtem Druckverlust (bzw. bei Vorliegen eines Signals, das einen solchen anzeigt), der auf eine Fehlfunktion (z.B. Verblockung) und infolge dessen einen Flüssigkeitsmitriss hinweisen könnte, kann ein Alarm ausgelöst werden. Ein Alarmsignal ist in der Regel mit einem Einzelwert als Schwellwert (für den Druckabfall bzw. Druckverlust) belegt. Die Funktion einer Packung wie sie z.B. in einer Wasserwäsche oder einem Direktkontaktkühler für einen Luftstrom vor dem Abscheider eingesetzt wird, kann z.B. durch Messung von Mengenströmen, Drücken und Temperaturen von Luft, Kühl- und Kaltwasser bestimmt bzw. bilanziert werden.

Ein Nachteil bei der oben genannten Art der Überwachung eines Abscheiders ist allerdings, dass eine solche Anzeige bzw. ein solcher Alarm, der auf einem bestimmten Schwellwert beruht, nicht eindeutig ist. Da im Normalfall der Druckverlust, z.B. je nach Abscheider- bzw. Gestrick- und Einbauart relativ klein ist, werden solche Schwell- bzw. Alarmwerte in der Regel als konstanter Schwellwert betriebsbedingt zu hoch eingestellt. Sie sind somit allein nicht geeignet einen Flüssigkeitsmitriss und infolgedessen eine Beschädigung oder Zerstörung nachfolgender Funktionseinheiten, wie z.B. einer Adsorbensfüllung zuverlässig zu verhindern.

Betriebsdruckverluste von neuen Abscheidern können, abhängig von der Gasbelastung, z.B. bei 1 bis 3 mbar liegen, während zugehörige Alarmlevel im Betrieb z.B. häufig bei über 10 mbar eingestellt werden. Nennenswerter Flüssigkeitsmitriss kann aber z.B. schon bei einem Druckverlust von 3 bis 5 mbar erfolgt sein. Mit derart hohen Alarmeinstellungen kann einerseits nicht zuverlässig ausgeschlossen werden, dass nicht bereits vorher schon ein Flüssigkeitsmitriss erfolgt ist, andererseits kann aber der Schwellwert auch nicht hinreichend reduziert werden, da es dann zu häufig zu Fehlalarmen und Betriebsunterbrechungen käme.

Dies führt immer wieder zu Schadensfällen, die wiederum mitunter dramatische Folgen nach sich ziehen können, z.B. den Ausfall einer ganzen Anlage für mehrere Wochen mit entsprechendem Verlust an Produkterlösen und erheblichen Kosten z.B. für das Austauschen der Adsorbensfüllung.

Die vorliegende Erfindung stellt sich vor diesem Hintergrund die Aufgabe, eine (wesentlich) bessere bzw. genauere Überwachung und Zustandsinformation für solche einzelnen Einheiten bis hin zur gesamten verfahrenstechnischen Anlage zu ermöglichen.

Diese Aufgabe wird gelöst durch ein Verfahren zum Überwachen eines Betriebs von mindestens einer Einheit in einer verfahrenstechnischen Anlage, einem Überwachungssystem hierfür sowie einer verfahrenstechnischen Anlage mit den Merkmalen der unabhängigen Patentansprüche. Ausgestaltungen sind Gegenstand der abhängigen Patentansprüche sowie der nachfolgenden Beschreibung.

### Vorteile der Erfindung

Die vorliegende Erfindung beschäftigt sich mit dem Überwachen eines Betriebs mindestens einer Einheit in einer verfahrenstechnischen Anlage, bei der durch die Einheit (zumindest) ein Medienstrom (oder Mengenstrom) geführt wird. Der Medienstrom kann dabei insbesondere einem Druckabfall bzw. Druckverlust unterliegen. Als solche Einheiten kommen beispielsweise Abscheider, einzelne Stoffaustauschabschnitte oder ganze Kolonnen, Wärmeübertrager und Prozessmaschinen in Betracht. Generell kann es sich dabei um verschiedene Apparate, Einbauten und Funktionseinheiten handeln. Ein Drahtgestrick-Abscheider dient z.B. dazu, Koaleszenzflächen für durchströmende Medien zu vergrößern, sodass einfacher bzw. besser z.B. Wasser aus durchströmender, feuchter Luft abgeschieden werden kann. Solche Abscheider können z.B. in Direktkontaktkühlern eingesetzt werden. Als verfahrenstechnische Anlage kommt z.B. eine Luftzerlegungsanlage in Betracht. Für weitere Ausführungen zu solchen Einheiten und verfahrenstechnischen Anlagen sei auch auf die einführenden Erläuterungen verwiesen, die hier ebenfalls gelten. Generell gilt dabei, dass auch mehrere Einheiten auf eine solche Weise überwacht werden können, also z.B. auch größere Teile einer Anlage, bzw. die gesamte Anlage.

Zum Überwachen des Betriebs einer solchen Einheit wird vorgeschlagen, vorherrschende (also aktuelle) Werte von (mehreren) Betriebsparametern (oder Prozessparametern) der Einheit selbst und/oder von davorliegenden, also stromaufwärts liegenden, und/oder nachfolgenden, also stromabwärts liegenden, Einheiten zu erfassen und in die Auswertung mit einzubeziehen. Solche Betriebsparameter sind beispielsweise Mengenströme, Druck und Temperatur von verwendeten Medien (also z.B. Luft oder sonstigem, verwendeten Gas und Wasser oder sonstigen Flüssigkeiten, der Druck kann dabei an geeigneten Stellen erfasst werden) und der Druckabfall (der Medienströme) über der Einheit. Zum Erfassen dieser aktuellen Werte können z.B. geeignete Sensoren verwendet werden, die dann von einem ausführenden Überwachungssystem (z.B. mit Rechenmitteln bzw. Prozessor) ausgelesen werden können. Denkbar ist aber auch, dass solche aktuellen Werte, jedenfalls zum Teil, basierend auf bekannten, physikalischen Zusammenhängen modelliert oder geschätzt werden.

Z.B. hängt ein Druckverlust von den erwähnten (anderen) Betriebsparametern bzw. deren aktuellen Werten ab, es gibt also bestimmte Zusammenhänge zwischen solchen Betriebsparametern und dem Druckabfall bzw. Druckverlust. Dies gilt generell für verschiedenste Einheiten, insbesondere aber z.B. für nachgeschaltete Abscheider in beispielsweise Direktkontaktkühlern sowie Packungen oder Füllkörperschüttungen. Für beispielhafte Zusammenhange sei an dieser Stelle auch auf die Figuren und die zugehörigen Figurenbeschreibung verwiesen.

Dies ermöglicht es nun, ein insbesondere mehrdimensionales Modell oder Betriebsmodell zu erstellen, in dem diese Zusammenhänge dargestellt bzw. eingearbeitet sind. Ein solches Betriebsmodell stellt damit z.B. charakteristische Druckverlustwerte für die betreffende Einheit in Abhängigkeit von sonstigen Betriebsparametern der Einheit selbst und/oder von benachbarten Einheiten, die in die Auswertung mit einzubeziehen sind, bereit. In dem Betriebsmodell sind insbesondere auch die zulässigen Betriebsbereiche z.B. für den Druckverlust oder auch andere der Betriebsgrößen implementiert (diese sind typischerweise mit einem gewissen Sicherheitsabstand zu den absoluten Grenzen versehen). Der erfasste Druckverlust kann dann mit dem zulässigen Betriebspunkt oder-bereich verglichen werden, der anhand des Betriebsmodells für die aktuellen Werte der Betriebsparameter bestimmt wurde oder wird. Beispielsweise kann in Abhängigkeit von den vorhandenen und verwendeten Betriebsparametern bzw. deren aktuellen Werten ein Druckverlust gemäß Betriebsmodell errechnet werden, der sich bei regulärem Betrieb ergeben würde. Abhängig von dem aktuellen gemessenen Wert des Druckverlustes oder eines oder mehreren anderen ausgewählten Betriebsparametern kann entschieden werden, ob eine Maßnahme durchgeführt oder eingeleitet werden soll.

Wenn der gemessene Druckverlust außerhalb des zulässigen Betriebsbereichs liegt, so wird eine Maßnahme eingeleitet. Eine solche Maßnahme kann insbesondere einen Alarm bzw. die Ausgabe eines Alarmsignals umfassen, womit z.B. ein Betreiber der Anlage auf ein etwaiges Problem hingewiesen wird. Je nach Bedarf kann die Maßnahme aber z.B. auch das Einleiten von Sicherheitsvorkehrungen wie das Herunterfahren von Teilen der Anlage oder der betreffenden Einheit (oder zumindest das Veranlassen eines solchen Herunterfahrens) umfassen, um weitergehende Schäden zu vermeiden. Außerdem kann anhand des aktuellen Werts des ausgewählten Betriebsparameters oder auch jedes anderen Betriebsparameters z.B. ein Trend bzw. eine Entwicklung des betreffenden Betriebsparameters bestimmt und, falls erforderlich, eine zukünftige Maßnahme (sog. "predictive maintenance") geplant werden. Dies kann insbesondere auch in Bezug zum zulässigen Betriebsbereich gesetzt werden.

Ein solches Betriebsmodell, das z.B. die Druckverluste in Abhängigkeit von den Betriebsparametern beschreibt, kann auf (theoretischen) Gleichungen, die z.B. die physikalischen Zusammenhänge abbilden, beruhen oder es wurde durch Interpolationsalgorithmen oder auch Maschinen-Lernalgorithmen aus vorhandenen großen Datenmengen erstellt. In der Regel werden sog. hybride Modelle, die teilweise auf physikalischen Gleichungen und zum Teil datenbasiert erstellt wurden, oder auch auf sonstigen Erfahrungswerten beruhen, verwendet. Die genannten Modelle können umfangreiche und genaue Modelle sein, wie sie auch bei der Auslegung der Funktionseinheit verwendet wurden, es können aber auch vereinfachte oder sogenannte Shortcut-Modelle sein. Die Modelle enthalten z.B. auch feste Parameter, die für die betreffende Einheit wie z.B. den jeweiligen Packungs- und Abscheider-Typ charakteristisch sind. Die Ausgangswerte der für das Betriebsmodell relevanten, festen Parameter sind somit schon vorab, d.h. vor Beginn der Überwachung bzw. auch schon vor Inbetriebnahme der Einheit bzw. der gesamten verfahrenstechnischen Anlage definiert. Hierbei handelt es sich z.B. um Parameter wie geometrische Daten der Einheit oder Stoffdaten-Modelle für die jeweiligen Prozessströme.

Zur Erhöhung der Genauigkeit können die oben genannten festen Parameter des Betriebsmodells während der Inbetriebnahme Phase (hierunter ist insbesondere das erstmalige Hochfahren einer neuen Einheit zu verstehen) bzw. während des Betriebes vor Ort an der neuen, sauberen Einheit verifiziert und ggf. angepasst werden. Denkbar ist in diesem Zusammenhang auch, dass manche Parameter dann auch immer wieder, z.B. in vorgegebenen zeitlichen Abständen insbesondere aber bei bestimmten Betriebspunkten, die erst im späteren Betrieb zum ersten Mal angefahren werden, aktualisiert, also erstmalig bestimmt bzw. angepasst werden. Dies ermöglicht eine schrittweise verbesserte und damit besonders genaue Modellierung bzw. Bestimmung des Betriebsmodells wie beispielsweise von Druckverlustkurven, es kann also eine kontinuierliche Verbesserung oder eine Art Feinjustierung vorgenommen werden.

Die erwähnten Zusammenhänge dienen also dazu, das Betriebsmodell für Einheiten wie z.B. Packungen und Abscheider oder Demister zu erstellen und den erwähnten zulässigen Betriebsbereich einschließlich zulässiger Deltas zu hinterlegen. Darin können z.B. Messunsicherheiten und/oder eine maximal zulässige Verblockung eingehen. Insbesondere wird ein solcher Betriebsbereich also abhängig von den Betriebsparametern der Einheit selbst und/oder von benachbarten Einheiten bzw. deren aktuellen Wert festgelegt. Das Betriebsmodell definiert damit den zulässigen Betriebsbereich der Einheit und/oder deren Einbauten, der von den oben genannten Parametern abhängt.

Unter einem Betriebsmodell kann dabei, wie erwähnt, z.B. ein analytisches Modell, das z.B. auf physikalischen Beziehungen beruht, verstanden werden, ebenso aber auch ein numerisches Modell, das z.B. Kennfelder oder Kennlinien umfasst, die auch auf Interpolationsalgorithmen oder auch Maschinen-Lernalgorithmen beruhen können. Ebenso kann auch eine Kombination aus den oben genannten zweckmäßig sein.

Ein gleichungsbasiertes Kennfeld (oder allgemein ein Betriebsmodell) kann für die Einheit der jeweiligen Anlage wie z.B. einen Abscheider also vorab erstellt und weitgehend automatisiert an der laufenden Anlage während der Erstinbetriebnahme im sauberen Zustand automatisch noch an die realen Messdaten angepasst und somit verfeinert werden. Dabei sollte insbesondere sichergestellt werden, dass die angepassten Parameter in einem eng begrenzten Bereich nahe bei den oben genannten Ausgangswerten, die bei der Auslegung der Funktionseinheit verwendet wurden, liegen. Andernfalls wäre davon auszugehen, dass der Einbauzustand nicht dem spezifizierten Sollzustand entspricht.

Während des Betriebs der Einheit bzw. der Anlage werden vorzugsweise alle relevanten Parameter (z.B. Durchflussmengen, Temperaturen am Ein und Austritt, Drücke und Druckdifferenzen über den relevanten Einbauten bzw. Einheiten) für Medien wie z.B. Luft, Kühl- und Kaltwasser kontinuierlich überwacht, als Trend mitgeschrieben und ausgewertet. Durch eine Verrechnung von aktuellen Prozessdaten mit den parametrisieren Kennfeldern bzw. dem Betriebsmodell kann damit kontinuierlich auf den aktuellen Zustand der Einheit oder deren Einbauten, z.B. den aktuellen Grad eines etwaigen Foulings geschlossen werden. Derartige Daten können als Trend ausgegeben werden, auch inklusive einer prognostizierten Restlaufzeit bis eine Maßnahme oder Aktion, z.B. Reinigen von Stoffaustauschpackung, Verteilern oder insbesondere des Demisters erforderlich wird. In diesem Sinne kann die Maßnahme auch das Veranlassen einer Wartung umfassen, z.B. wenn der aktuelle Druckverlust zwar um einen bestimmten Wert vom Referenz-Druckverlust abweicht, aber (noch) nicht so stark, dass von einem akuten Fehler ausgegangen werden muss.

Es wird im Rahmen der Erfindung also vorgeschlagen den einen festen Schwellwert bzw. Alarmwert durch einen alternativen Ansatz zu ersetzen, in dem möglichst auf den konkreten Betriebszustand und den zu erwartenden Wert eines Betriebsparameters, wie z.B. den Druckverlust eingegangen wird, um so die Fehlfunktion der Einheiten wie z.B. Abscheider und auch Packungen oder nachgeschalteten Einheiten wie z.B. Adsorbern zuverlässig und frühzeitig detektieren zu können oder/und auf historischen Betriebsdaten basierend eine Prognose für eine zu erwartende Restlaufzeit abgeben zu können.

Es werden damit also insbesondere eindeutig zulässige Betriebsbereiche als Funktion des aktuellen Gesamtanlagenbetriebsfalles definiert und von fehlerhaften, unzulässigen Bereichen abgegrenzt. Es wird also eine Alarm- und insbesondere auch eine Diagnosefunktion für die gesamte Einheit ermöglicht. Fehlfunktionen und Negativtrends können auf diese Weise frühzeitig identifiziert werden, der gesamte Betrieb wird deutlich zuverlässiger und sicherer und die Einheit bzw. der Apparat damit um Größenordnungen besser überwachbar, als das beim bisherigen Vorgehen der Fall ist.

Ergänzend kann auch vorgesehen sein, dass historische Betriebsdaten, also Betriebsdaten mit z.B. Werten der erwähnten Betriebsparameter bei vorangegangen Betriebszeiten berücksichtigt und/oder ausgewertet werden. Dabei können nicht nur historische Betriebsdaten der betreffenden Einheit bzw. Anlage verwendet werden, sondern auch historische Betriebsdaten von anderen, vergleichbaren Einheiten bzw. Anlagen. Diese können dann in dem Vergleichsmodell berücksichtigt werden bzw. das Betriebsmodell kann anhand dieser historischen Betriebsdaten immer wieder (wiederholt) angepasst, insbesondere verbessert werden.

Anhand solcher historischer Betriebsdaten und insbesondere auch damit korrelierter Ereignisse oder Fehler kann das Betriebsmodell wie die genannten (gleichungsbasieren) Kennfeld-Methoden mit Methoden künstlicher Intelligenz - neben dem Überwachen - auch zu einem noch deutlich umfangreicheren Diagnosesystem für die jeweiligen Einheiten bzw. Apparate und Einbauten erweitert werden, so dass z.B. unterschieden werden kann, ob die Veränderungen des Betriebsverhaltens z.B. auf kontinuierliche Verlegung und Fouling oder z.B. auf instantane Schaumbildung infolge von Chemikalien-Fehldosierung im Kühlwassersystem oder andere Effekte zurückzuführen sind.

Die Erfindung betrifft neben dem Verfahren auch ein Überwachungssystem zum Überwachen eines Betriebs einer Einheit in einer verfahrenstechnischen Anlage sowie eine verfahrenstechnische Anlage mit mindestens einer solchen Einheit und einem oder mehreren solchen Überwachungssystemen. Das Überwachungssystem ist dabei dazu eingerichtet, ein vorstehend beschriebenes Verfahren auszuführen. In einem einfachen Fall weist das Überwachungssystem hierzu einen Rechner auf, der die entsprechenden Daten bzw. Werte der Betriebsparameter von z.B. Sensoren einlesen kann. Es versteht sich, dass ein solches Überwachungssystem auch mehrere solcher Einheiten, auch verschiedene Einheiten, bzw. eine Anlage auf diese Weise überwachen kann.

Hinsichtlich weiterer Vorteile sowie näherer Erläuterungen des Überwachungssystems sowie der verfahrenstechnischen Anlage sei zur Vermeidung von Wiederholungen auf obige Ausführungen zum Verfahren verwiesen, die hier entsprechend gelten.

### Kurze Beschreibung der Zeichnung

- Figur 1: zeigt schematisch eine verfahrenstechnische Anlage, bei der ein erfindungsgemäßes Verfahren durchführbar ist.
- Figur 2: zeigt schematisch einen Ablauf eines erfindungsgemäßen Verfahrens in einer bevorzugten Ausführungsform.

- Figuren 3 bis 5: zeigen schematisch Druckverlustkurven zur Erläuterung der Erfindung.

### Ausführliche Beschreibung der Zeichnung

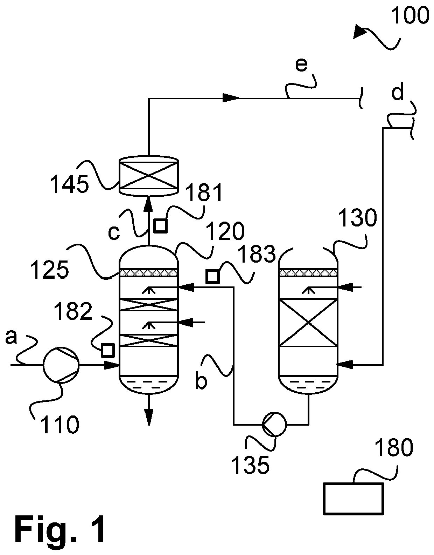

In Figur 1 ist ein Teil einer als Luftzerlegungsanlage ausgebildeten verfahrenstechnischen Anlage 100 an sich bekannter Art dargestellt, bei der ein erfindungsgemäßes Verfahren in bevorzugter Ausführungsform durchführbar ist. Luftzerlegungsanlagen der (hier nur teilweise) gezeigten Art sind vielfach an anderer Stelle beschrieben, beispielsweise bei H.-W. Häring (Hrsg.), Industrial Gases Processing, Wiley-VCH, 2006, insbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage oder auch andere verfahrenstechnische Anlagen zum Einsatz der vorliegenden Erfindung können auf unterschiedlichste Weise ausgebildet sein.

Die in Figur 1 gezeigte Luftzerlegungsanlage 100 verfügt unter anderem über einen Hauptluftverdichter 110, einen Verdunstungskühler 130, einen Direktkontaktkühler 120 sowie ein Reinigungssystem (Adsorber) 145. Luft a als ein Medium wird mittels des Hauptluftverdichters 110 verdichtet und in den Direktkontaktkühler 120 eingebracht. In dem Direktkontaktkühler 120 wird die Luft mittels Wasser b im Gegenstrom gekühlt. Dieses Wasser b wiederum wurde über einen Strom d, der z.B. aus einem (nicht gezeigten) Hauptwärmetauscher kommt, dem Verdunstungskühler 130 zugeführt und gekühlt, bevor es mittels einer Wasserpumpe 135 dem Direktkontaktkühler 120 zugeführt wird.

In dem Direktkontaktkühler 120 ist beispielhaft ein Abscheider 125 (Demister) vorgesehen, mittels dessen verbliebene Tropfen u.a. von dem Wasserstrom, der zuvor im Direktkontaktkühler 120 zum Abkühlen der (verdichteten) Luft mit der Luft in Kontakt gebracht wurde, abgeschieden werden. Nach dem Abscheider 125 wird die Luft als Strom c über das Reinigungssystem 145 z.B. dem (hier nicht gezeigten) Hauptwärmetauscher zugeführt. Auch im Verdunstungskühler 130 befindet sich ein Demister.

Weiterhin ist ein Überwachungssystem 180, z.B. ein Rechensystem oder Computer, gezeigt, mit dem ein erfindungsgemäßes Verfahren in bevorzugter Ausführungsform zum Überwachen des Betriebs z.B. des Abscheiders 125 ausführbar ist, wie es nachfolgend noch näher erläutert werden soll. Zudem sind beispielhaft Sensoren 181 zur Messung der Druckdifferenz über dem Abscheider 125 und der Lufttemperatur nach dem Abscheider, 182 zur Messung von Mengenstrom sowie Druck und Temperatur des in den Direktkontaktkühler eintretenden Luftstromes und 183 zur Messung von Mengenstrom und Temperatur des Wassers gezeigt. Die Betriebswerte können z.B. von dem Überwachungssystem 180 ausgelesen werden, um die für das Verfahren nötigen Parameter zu erhalten. Es versteht sich, dass ggf. weniger oder aber auch noch weitere Sensoren vorgesehen und ausgewertet werden können, die hier der Übersichtlichkeit halber nicht gezeigt sind.

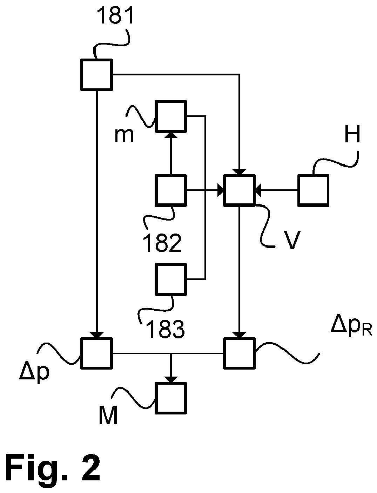

In Figur 2 ist nun schematisch ein Ablauf eines erfindungsgemäßen Verfahrens in einer bevorzugten Ausführungsform als Ablaufdiagramm dargestellt. Dabei soll beispielhaft der Betrieb des Abscheiders 125 als eine Einheit der Luftzerlegungsanlage 100 gemäß Figur 1 überwacht werden. Die Überwachung der Stoffaustauscheinheit kann in analoger Weise erfolgen.

Zunächst werden aktuelle Werte für verschiedene Betriebsparameter für den Betrieb des Abscheiders bzw. der Luftzerlegungsanlage erfasst. Im Bespiel können das die oben genannten Werte aus den Sensorsystemen 181, 182 und 183 sein. Mit dem Sensorsystems 181 wird unter anderem der Druckverlust Δp über den Abscheider 125, wie er aktuell vorliegt, bestimmt. Die von den Sensorsystemen 181, 182 und 183 ermittelten aktuellen Betriebswerte dienen als Eingabeparameter für das Betriebsmodell V. Beispielhaft ist ein Medien- bzw. Mengenstrom m von z.B. des Luftstroms a gezeigt. Damit kann der zulässige Betriebsbereich Δp_{R} für z.B. den Druckverlust bestimmt werden, wie er bei den eben gemessenen bzw. bestimmten Werten der Betriebsparameter vorliegen darf.

Wie vorstehend schon erwähnt, kann dieses Betriebsmodell z.B. vor Inbetriebnahme des Abscheiders 125 bzw. der Luftzerlegungsanlage 100 und/oder während der Inbetriebnahmephase oder des Betriebes näher bestimmt worden sein. Ebenso können historische Betriebsdaten H dabei berücksichtigt sein. Der zulässige Betriebsbereich gibt damit einen Druckverlust an, wie er bei den aktuell herrschenden Bedingungen (aktuelle Werte der Betriebsparameter) sinnvoll ist, sodass kein Fehler vorliegt. Hierzu sei angemerkt, dass ein gewisser Druckverlust prinzipbedingt bei einem solchen Abscheider auftritt.

Der bestimmte, aktuelle Druckverlust Δp wird dann mit dem zulässigen Betriebsbereich Δp_{R} verglichen. Wenn der aktuelle Druckverlust außerhalb des zulässigen Betriebsbereichs liegt, dann kann davon ausgegangen werden, dass etwas nicht ordnungsgemäß funktioniert bzw. ein Fehler vorliegt. Es kann dann eine Maßnahme wie ein Alarm oder ein Herunterfahren der Anlage veranlasst werden. Beispielsweise deutet ein erhöhter Druckverlust auf einen (unerwünschten) Flüssigkeitsmitriss im Abscheider hin. Hierzu sei noch erwähnt, dass der zulässige Betriebsbereich derart vorgegeben werden kann, dass etwaige Messungenauigkeiten abgedeckt werden und nicht nur aufgrund von ungenauer Messung die Maßnahme eingeleitet wird. Wie ebenfalls schon erwähnt, kann der zulässige Betriebsbereich insbesondere auch in Abhängigkeit von den Betriebsparametern bzw. deren aktuellen Werten vorgegeben werden. Ebenfalls erlaubt dies die Erstellung einer Diagnose oder das Mitschreiben von Trends z.B. des Druckverlusts.

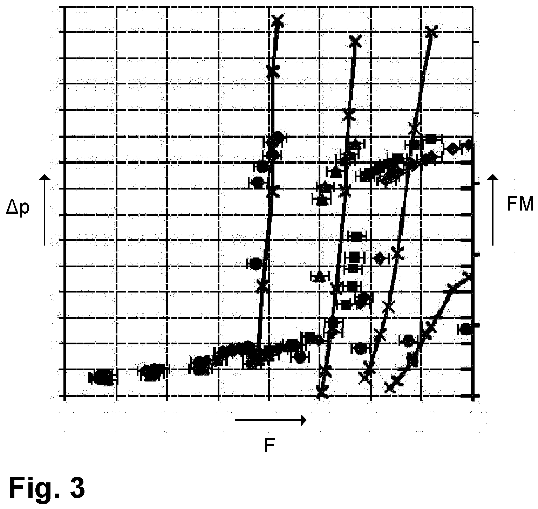

In Figur 3 sind schematisch Druckverlustkurven bei einem beispielhaften Abscheider (Demister) zur Erläuterung der Erfindung gezeigt. Hierzu sind auf der linken Achse ein Druckverlust Δp und auf der rechten Achse ein Flüssigkeitsmitriss FM, beides über der Gasbelastung F, aufgetragen. Die Linien mit Kreuzen zeigen das Maß an unerwünschtem Flüssigkeitsmitriss bei von links nach rechts als Parameter geringer werdendem Wasser-Mengenstrom b an, der auf die Packung des Direktkontaktkühlers 120 aufgegeben wird. Die ausgefüllten Elemente geben die Druckverluste bei von links nach rechts geringer werdendem Wasser-Mengenstrom b als Parameter an.

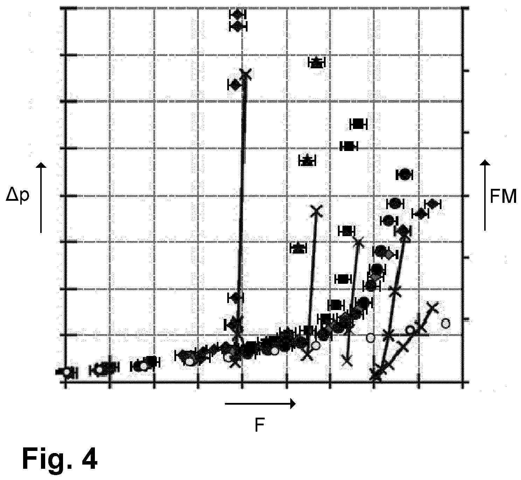

In Figur 4 sind schematisch Druckverlustkurven bei einem weiteren beispielhaften Abscheider (Demister, z.B. eines anderen Typs als bei Figur 3)) zur Erläuterung der Erfindung gezeigt. Hierzu sind auf der linken Achse ein Druckverlust Δp und auf der rechten Achse ein Flüssigkeitsmitriss FM, beides über der Gasbelastung F, aufgetragen. Die Linien mit Kreuzen zeigen das Maß an unerwünschtem Flüssigkeitsmitriss bei von links nach rechts als Parameter geringer werdendem Wasser-Mengenstrom b an, der auf die Packung des Direktkontaktkühlers 120 aufgegeben wird. Die ausgefüllten Elemente geben die Druckverluste bei von links nach rechts geringer werdendem Wasser-Mengenstrom b als Parameter an. Die leeren Kreise stehen für den trockenen Druckverlust.

Die Figuren 3 und 4 zeigen, wenn auch im Detail unterschiedlich, für die regulären Betriebsfälle bis hin zur maximalen Belastung und bei darauffolgender Überlast ein zu erwartendes, charakteristisches Verhalten. Der Beginn des Aufstauens der Flüssigkeit zeigt sich in den Druckverlustkurven durch einen erkennbaren Anstieg der Krümmung, der anschließende Flüssigkeitsmitriss in einem entsprechenden Anstieg der Druckverluste. Die Grenzbelastung und danach die Fehlfunktion des Abscheiders zeigt sich deutlich in den Druckverlustkurven. Der parametrierte Regelbetrieb ist in Abhängigkeit vom auf die vorgeschaltete Stoffaustuschpackung aufgegebenen Wasser-Mengenstrom b, theoretisch jeweils bis zu maximalen Gasbelastungen F_{Grenz} und daraus resultierenden Druckverlust-Grenzwerten möglich.

Diese ergeben sich aus den jeweiligen Schnittpunkten der Linien mit Kreuzen mit der Nulllinie für den Flüssigkeitsmitriss (FM=0). In der Realität wird man von den genannten Grenzpunkten einen entsprechenden Sicherheitsabstand (von z.B. 5% oder 10%) einhalten. Das in den Figuren 3 und 4 gezeigte, im Beispiel diskrete Parameterfeld einschließlich der zulässigen wie auch der Grenzbereiche wird im Betriebsmodell V als kontinuierliches Modell abgebildet. Während des Betriebes werden dann gemäß Figur 2 relevante Parameter gemessen, und gleichzeitig mit einem Teil der Messwerte als Eingabe ins Betriebsmodell dieselben relevanten Parameter (wie z.B. der Druckverlust) berechnet. Die gemessenen und berechneten Parameter werden unter Berücksichtigung von Messunsicherheiten miteinander verglichen. Sind die Werte gleich und befinden sie sich innerhalb des zulässigen Teils des Betriebsfeldes so sind keine weiteren Maßnahmen M erforderlich.

Andernfalls würde ein Alarm ggf. zusammen mit entsprechender Diagnose ausgegeben werden. Dies könnte zum Beispiel dann der Fall sein, wenn über eine längere Betriebszeit mit kontinuierlicher Verschmutzung relevante Messwerte einen dauerhaften Trend aufweisen, sie in Richtung der Grenzen des Betriebsfeldes wandern oder bereits außerhalb des Betriebsfeldes zu liegen kommen. Dies gilt insbesondere auch dann, wenn aufgrund von Teillastbetrieb die absoluten Grenzwerte (siehe FM-Linien mit Kreuzen) z.B. für den Druckverlust noch nicht erreicht sind. Dies ist, wie schon beschrieben, einer der wesentlichen Vorteile der Erfindung gegenüber der bisher üblichen eindimensionalen Betrachtung.

Ein weiteres Beispiel wäre das instantane Auftreten von Schäumen in der Einheit, was z.B. durch eine Fehldosierung von Chemikalien im Kühlwassersystem ausgelöst werden kann. Auch hier würden sich einschlägige gemessene Parameter verändern und dann von den berechneten Werten aus dem Betriebsmodell V abweichen, was ebenfalls zu einer Maßnahme M führen würde.

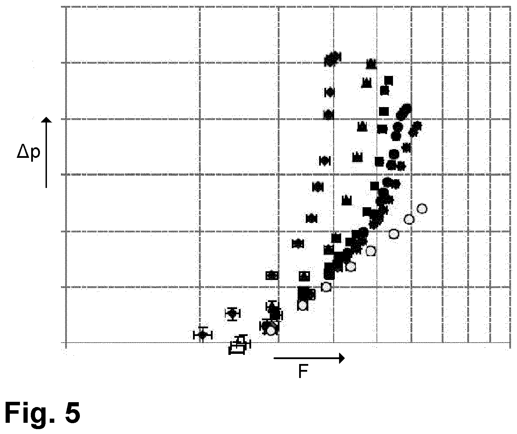

In Figur 5 sind schematisch Druckverlustkurven bei einer beispielhaften Packung zur Erläuterung der Erfindung gezeigt. Hierzu ist der Packungs-Druckverlust Δp über der Gasbelastung F aufgetragen. Die ausgefüllten Elemente geben die Druckverluste bei von links nach rechts geringer werdendem Wasser-Mengenstrom b als Parameter an. Die leeren Kreise stehen für den trockenen Druckverlust. Die Figur 5 zeigt für die regulären Betriebsfälle bis hin zur maximalen Belastung und bei darauffolgender Überlast ein zu erwartendes, charakteristisches Verhalten einer Stoffaustauschpackung, die im Gegenstrom mit aufsteigendem Gas und nach unten fließender Flüssigkeit betrieben wird. Der Beginn des Aufstauens der Flüssigkeit zeigt sich in den Druckverlustkurven durch einen erkennbaren Anstieg der Krümmung, der anschließende Flüssigkeitsmitriss in einem entsprechenden Anstieg der Druckverluste. Die Grenzbelastung und danach die Fehlfunktion der Packung zeigt sich somit ebenfalls deutlich in den Druckverlustkurven.

Der parametrierte Regelbetrieb ist in Abhängigkeit z.B. vom Wasser-Mengenstrom b, jeweils bis zur zugehörigen maximalen Gasbelastungen F_{Grenz}, sinnvoll möglich, die durch den deutlich erkennbaren Anstieg der Krümmung in den Druckverlustkuren definiert werden kann. Daraus resultieren auch die parametrierten zugehörigen Druckverlust Grenzwerte. Das in der Figur 5 gezeigte, im Beispiel diskrete Parameterfeld einschließlich der zulässigen Betriebsbereiche, wie auch der Grenzbereiche wird im Betriebsmodell V als kontinuierliches Modell abgebildet.

Während des Betriebes werden dann gemäß Figur 2 relevante Parameter gemessen, und gleichzeitig mit einem Teil der Messwerte als Eingabe ins Betriebsmodell dieselben relevanten Parameter (wie z.B. der Druckverlust oder Temperaturen) berechnet. Die gemessenen und berechneten Parameter werden unter Berücksichtigung von Messunsicherheiten miteinander verglichen. Sind die Werte gleich und befinden sie sich innerhalb des zulässigen Teils des Betriebsfeldes und unterhalb festgelegter Grenzbelastungen, so sind keine weiteren Maßnahmen M erforderlich. Andernfalls würde man einen Alarm ggf. zusammen mit entsprechender Diagnose ausgeben.

Beispiele für andere Fehler, die zu einer Maßnahme M führen können, sind bereits in der Beschreibung zu den Figuren 4 und 5 aufgeführt. Sie gelten analog für den hier beschriebenen Fall der Stoffaustauschpackung. Die wesentlichen Vorteile der Erfindung gegenüber der bisher üblichen, eindimensionalen Betrachtung sind hier ebenfalls zutreffend.

## Patentansprüche

1. Verfahren zum Überwachen eines Betriebs mindestens einer Einheit (125) in einer verfahrenstechnischen Anlage (100), durch welche Einheit (125) mindestens ein Mengenstrom geführt wird,
wobei vorherrschende Werte von mehreren Betriebsparametern der zu überwachenden Einheit (125) und/oder mindestens einer davorliegenden und/oder nachfolgenden Einheit erfasst werden,
wobei anhand eines Betriebsmodells (V) und den aktuellen Werten von zumindest einem Teil der mehreren Betriebsparameter ein zulässiger Betriebsbereich (Δp_{R}) für wenigstens einen ausgewählten der Betriebsparameter bestimmt wird, und
wobei in Abhängigkeit von dem aktuellen Wert des wenigstens einen ausgewählten der Betriebsparameters (Δp) und dem zulässigen Betriebsbereich (Δp_{R}) bestimmt wird, ob eine Maßnahme (M) eingeleitet werden soll.

2. Verfahren nach Anspruch 1, wobei das Betriebsmodell (V) auf Parametern zumindest einer der Einheiten (125) beruht.

3. Verfahren nach Anspruch 2, wobei zumindest ein Teil der Parameter zumindest einer der Einheiten (125) vor Beginn der Überwachung, insbesondere vor Inbetriebnahme der Einheit (125), bestimmt wird.

4. Verfahren nach Anspruch 2 oder 3, wobei zumindest ein Teil der Parameter zumindest einer der Einheit (125) während einer Inbetriebnahme und/oder während eines Betriebs der Einheit (125) bestimmt wird.

5. Verfahren nach einem der vorstehenden Ansprüche, wobei, wenn der aktuelle Wert des wenigstens einen ausgewählten der Betriebsparameters (Δp) außerhalb des zulässigen Betriebsbereich s (Δp_{R}) liegt, eine Maßnahme (M) eingeleitet wird.

6. Verfahren nach einem der vorstehenden Ansprüche, wobei die Maßnahme (M) wenigstens eines der folgenden umfasst: Erstellen und/oder Ausgeben einer Diagnose, Ausgeben eines Alarms, Einleiten einer Sicherheitsvorkehrung, Veranlassen eines Herunterfahrens der zu überwachenden Einheit (125) und/oder zumindest eins Teils der verfahrenstechnischen Anlage (100), Veranlassen einer Wartung.

7. Verfahren nach einem der vorstehenden Ansprüche, wobei in Abhängigkeit von dem aktuellen Wert des wenigstens einen ausgewählten der Betriebsparameters (Δp) und dem zulässigen Betriebsbereichs (Δp_{R}) eine Diagnose der zu überwachenden Einheit (125) erstellt wird.

8. Verfahren nach einem der vorstehenden Ansprüche, wobei das Betriebsmodell (V) weiterhin auf historischen Betriebsdaten (H) der zumindest einer der Einheiten (125) und/oder einer anderen, vergleichbaren Einheit beruht.

9. Verfahren nach Anspruch 8, wobei das Betriebsmodell (V) anhand der historischen Betriebsdaten (H) wiederholt angepasst wird.

10. Verfahren nach einem der vorstehenden Ansprüche, wobei die Betriebsparameter ausgewählt sind aus: einem Druckverlust (Δp) über die zu überwachende Einheit (125), Mengenströmen (m) von verwendeten Medien, Drücken von verwendeten Medien (a, c), Temperaturen von verwendeten Medien (b), Medienbelastung, und Berieselungsdichten von verwendeten Medien.

11. Verfahren nach einem der vorstehenden Ansprüche, wobei der wenigstens eine ausgewählte Betriebsparameter einen Druckverlust (Δp) über die zu überwachende Einheit (125) umfasst.

12. Verfahren nach einem der vorstehenden Ansprüche, wobei zumindest eine der Einheiten, insbesondere die zu überwachende Einheit (125), ausgewählt ist aus:
einem Abscheider, der insbesondere Teil eines Direktkontaktkühlers (120) ist,
einer Stoffaustauscheinheit, und einem Adsorber.

13. Verfahren nach einem der vorstehenden Ansprüche, wobei als verfahrenstechnische Anlage (100) eine Luftzerlegungsanlage verwendet wird.

14. Überwachungssystem (180) zum Überwachen eines Betriebs einer Einheit (125) in einer verfahrenstechnischen Anlage (100), durch welche Einheit (125) ein Medienstrom (a, c) geführt wird, wobei das Überwachungssystem (180) dazu eingerichtet ist, ein Verfahren nach einem der vorstehenden Ansprüche auszuführen.

15. Verfahrenstechnische Anlage (100) mit mindestens einer Einheit (125), durch welche ein Medienstrom (a, c) geführt wird, und mit einem oder mehreren Überwachungssystemen (180) nach Anspruch 14.
